# EUROPÄISCHE PATENTANMELDUNG

(11) **EP 0 557 696 A1**
(43) Veröffentlichungstag der Anmeldung: **01.09.1993**
(21) Anmeldenummer: 93100517.7
(22) Anmeldetag: 15.01.1993
(51) Int. Cl.: F16K 11/074

(54) **Steuerpatrone für eine Einhebel-Mischarmatur**

(30) Priorität: 25.02.1992 CH 572/92
(71) Anmelder: KWC AG, CH-5726 Unterkulm (CH)
(72) Erfinder: Graber, Heinz, CH-5727 Oberkulm (CH)
(74) Vertreter: Patentanwälte Schaad, Balass & Partner AG

(57) **Zusammenfassung**

Die Steuerpatrone weist in Pfeilrichtung (**31**) einen Warm- und einen Kaltwasser-Eingangsanschluss auf. Ein Auslass (**29**) erlaubt das Zapfen von Kalt-, Warm- oder Mischwasser. Zum Betätigen dient ein in eine Bohrung (**16**) einsetzbarer Hebel. Lediglich durch eine Drehbewegung kann an diesem Hebel die zugehörige Mischarmatur geöffnet und die gewünschte Wassertemperatur eingestellt werden. Besonders vorteilhaft ist diese Steuerpatrone beim Einsatz in einem Spital, in welchem aus hygienischen Gründen der Hebel nur mit dem Arm oder Ellbogen betätigt werden soll.

## Beschreibung

Die Erfindung bezieht sich auf eine Steuerpatrone für eine Einhebel-Mischarmatur nach dem Oberbegriff des Anspruchs 1. An einer solchen Mischarmatur lassen sich an dem einzigen Hebel die Durchfluss-Wassermenge, nachfolgend nur noch als Wassermenge bezeichnet, sowie die Mischtemperatur zwischen den Temperaturen des Kalt- und des Warmwassers einstellen.

Eine solche aus der CH-A5 651 119 bekannte Mischarmatur weist einen Betätigungshebel auf, an dem durch eine Schwenkbewegung die Wassermenge und durch eine Drehbewegung die Mischtemperatur einstellbar ist. Beim Öffnen wird eine Keramikscheibe relativ zu einer anderen linear verschoben und zum Verstellen der Temperatur relativ zur anderen verdreht. Die beiden unmittelbar aneinandergrenzenden Keramikscheiben weisen Durchlässe für Kalt- und Warmwasser sowie für den gemischten Auslauf auf. In der Offenstellung fluchten die entsprechenden Durchlässe beider Keramikscheiben miteinander und in der Schliessstellung sind sie durch die jeweils andere Scheibe versperrt. Durch Drehverstellung eines Anschlages lässt sich bei dieser bekannten Mischarmatur eine Temperatur- und Mengenbegrenzung festlegen.

Das Öffnen und Einstellen der Mischtemperatur an einem einzigen Hebel bei der bekannten Mischarmatur ist sehr praktisch, sofern der Hebel von Hand betätigt wird. Falls dieser jedoch nicht mit der Hand angefasst werden kann oder darf, beispielsweise aus hygienischen Gründen, z.B. in einem Spital, ist in der Regel eine Betätigung mit dem Arm oder Ellbogen erforderlich. Dies erfordert jedoch eine erhöhte Geschicklichkeit, die insbesondere bei raschen Handlungen, beispielsweise in einem Operationssaal, nicht vorausgesetzt werden kann, da Bewegungen in zwei Freiheitsgraden erforderlich sind. Es ist auch denkbar, dass behinderte Menschen eine solche Mischarmatur ohne Hand betätigen müssen.

Der Erfindung liegt deshalb die Aufgabe zugrunde, eine Steuerpatrone für eine Einhebel-Mischarmatur zu schaffen, die sowohl zum Öffnen und Schliessen wie auch zum Einstellen der Mischtemperatur ohne erhöhte Geschicklichkeit mit dem Arm oder Ellbogen betätigbar ist.

Die gestellte Aufgabe wird erfindungsgemäss durch die im Anspruch 1 angegebenen kennzeichnenden Merkmale gelöst.

Die erfindungsgemässe Steuerpatrone ist sowohl zum Öffnen und Schliessen wie auch zum Einstellen der Mischtemperatur in nur einer Ebene zu bewegen, da die bewegbare Steuerscheibe ausschliesslich eine Drehbewegung für sämtliche Einstellungen erfordert. Dies erleichtert die Betätigung erheblich. Besonders vorteilhaft ist es, wenn der Betätigungshebel an diese Betätigungsart angepasst ist, beispielsweise in der Ausbildung seiner Länge.

Die abhängigen Ansprüche kennzeichnen bevorzugte Ausführungsformen der Erfindung.

Anhand der Zeichnungen wird ein Ausführungsbeispiel der Erfindung naher erläutert. Es zeigt:
- Fig. 1: eine Steuerpatrone für eine Einhebel-Mischarmatur im Längsschnitt,
- Fig. 2: die Steuerpatrone in einem Querschnitt nach der Schnittlinie II - II gemäss Fig. 1,
- Fig. 3: eine Ansicht auf zwei übereinanderliegenden Steuerscheiben in der Schliessstellung,
- Fig. 4: wie Fig. 3, jedoch in der Kaltstellung,
- Fig. 5: wie Fig. 3, jedoch in der Mittel- bzw. Mischstellung zwischen Warm- und Kaltstellung,
- Fig. 6: wie Fig. 3, jedoch in der Warmstellung,
- Fig. 7: die Steuerpatrone in der Draufsicht,
- Fig. 8: einen Querschnitt durch die Steuerpatrone mit einem Temperaturbegrenzungsring nach der Schnittlinie VIII - VIII gemäss Fig. 1 und
- Fig. 9: eine Anordnung zur Geräuschminderung und Durchflussbegrenzung in einer Schnittdarstellung als Detailansicht nach Fig. 1, jedoch in einem grösseren Massstab.

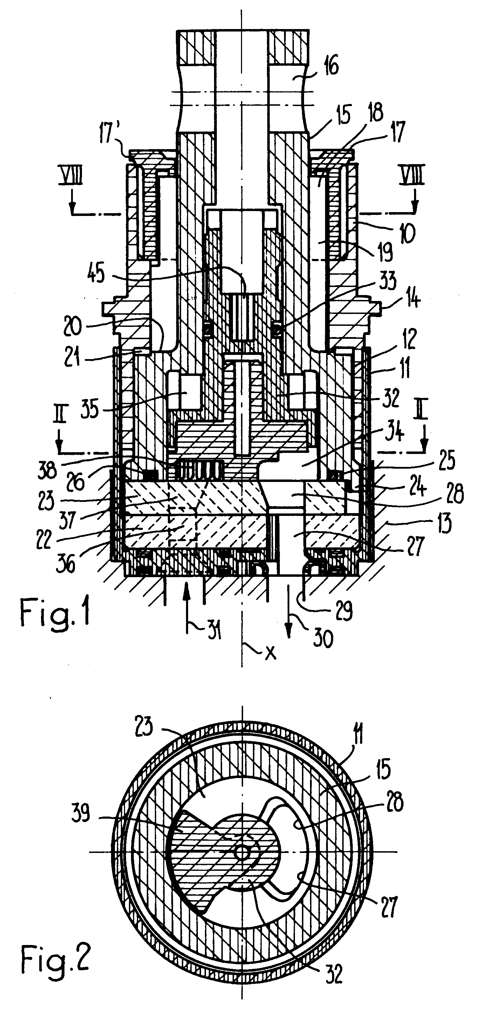

Die in der Fig. 1 dargestellte Steuerpatrone weist ein aus einem Oberteil **10** und einem Unterteil **11** bestehendes Gehäuse auf. Das Unterteil **11** übergreift das Oberteil **10** und ist durch eine Schnappverbindung **12** mit diesem verbunden. Mit dem Unterteil **11** voran wird die Steuerpatrone in ein schraffiert angedeutetes Gehäuse **13** einer nicht dargestellten Mischarmatur eingesetzt und mittels einer nicht dargestellten Überwurfmutter an am Oberteil **10** angeordnete Flanschabschnitte **14** befestigt.

Aus dem Oberteil **10** des Gehäuses ragt eine Steuerglocke **15** heraus, die quer zu ihrer Längserstreckung eine Bohrung **16** zur Aufnahme eines nicht dargestellten Betätigungshebels aufweist. Der Drehwinkel der Steuerglocke **15** ist durch einen im Oberteil **10** eingesetzten, verstellbaren Temperaturbegrenzungsring **17** begrenzt.

Die Steuerglocke **15** weist Anschlagnocken **18** auf, die mit am Temperaturbegrenzungsring **17** angeordneten Anschlägen **19** zusammenwirken. Mit einer Schulter **20** ist die Steuerglocke **15** mittels eines Gleitringes **21** an einem Absatz im Oberteil **10** des Gehäuses abgestützt.

Als Absperr- und Durchflussmengen-Verstellelemente für Kalt- und Warmwasser dienen eine erste, untenliegende gehäusefeste Keramik-Steuerscheibe **22** und eine zweite, obenliegende drehbare Keramik-Steuerscheibe **23**, nachfolgend nur noch als erste und zweite Steuerscheibe bezeichnet. Beiden Steuerscheiben **22**, **23** ist eine feste Mittelachse zugeordnet, die mit der Mittelachse x der Steuerpatrone zusammenfällt.

Die Steuerglocke **15** greift mit einem Mitnehmer **24** zur Herstellung einer Drehverbindung in eine in der zweiten Steuerscheibe **23** angeordnete Aussparung ein. An der Stirnseite der Steuerglocke **15** ist eine Ringnut **25** zur Aufnahme eines O-Ringes **26** angeordnet, der die Steuerglocke 15 gegen die zweite Steuerscheibe **23** nach aussen abdichtet.

Die Steuerscheiben **22**, **23** weisen noch zu beschreibende Durchlässe auf, von denen in der Fig. 1 nur der Auslass-Durchlass **27** in der ersten Steuerscheibe **22** und der Auslass-Durchlass **28** in der zweiten Steuerscheibe **23** sichtbar sind. In der dargestellten Stellung fluchten diese beiden Durchlässe **27**, **28** miteinander.

Der Durchlass **27** mündet in einen gehäuseseitigen Auslass **29**, der in Pfeilrichtung **30** in Abhängigkeit von der jeweiligen Stellung der zweiten Steuerscheibe **23** das Kalt- oder Warmwasser oder das Mischwasser führt. Die Zuführung von Kalt- und von Warmwasser erfolgt über ebenfalls stirnseitige Anschlüsse in Pfeilrichtung **31**, welche zugleich der Strömungsrichtung entspricht.

Innerhalb der Steuerglocke **15** ist ein Verteilelement **32** angeordnet und mittels eines zweiten O-Ringes **33** gegen die Steuerglocke **15** abgedichtet. Zwischen dem Verteilelement **32** und der zweiten Steuerscheibe **23** befindet sich eine Auslass- bzw. Mischkammer **34**. Das Verteilelement **32** ist mittels Stützrippen **35** an einem Absatz in der Steuerglocke **15** in axialer Richtung abgestützt.

Nicht auf der zeichnerischen Schnittkante liegend sind in den Steuerscheiben **22**, **23** Einlass-Durchlässe **36**, **37** gestrichelt angedeutet. Oberhalb des Einlass-Durchlasses **37** weist das Verteilelement **32** zapfen- oder stegartige Vorsprünge **38** auf, die sich dem Einlass-Durchlass **37** entgegen erstrecken und zur Geräuschminderung dienen.

Aus der Fig. 2 ist ersichtlich, dass das Verteilelement **32** einen sektorartigen Abschnitt **39** aufweist, der die zapfen- oder stegartigen Vorsprünge **38** gemäss Fig. 1 trägt. Ferner ist die Form des Auslass-Durchlasses **28** in der zweiten Steuerscheibe **23** ersichtlich.

Die Figuren 3 bis 6 zeigen Draufsichten auf die im Unterteil **11** des Gehäuses angeordnete zweite Steuerscheibe **23** mit der darunter angeordneten ersten Steuerscheibe **22**. Dabei ist zu beachten, dass die erste Steuerscheibe **22** gegenüber der Fig. 2 um 90° im Uhrzeigersinn verdreht dargestellt ist, so dass sich der in der Fig. 1 auf der rechten Seite dargestellte Auslass-Durchlass **27** in den Figuren 3 bis 6 unten befindet. Aus diesen Figuren sind vorerst Lage und Form der Durchlässe **28** und **37** in der zweiten Steuerscheibe **23** relativ zueinander ersichtlich. Der bereits in der Fig. 1 angedeutete Einlass-Durchlass **36** in der ersten Steuerscheibe **22** ist der Warmwasser-Durchlass. Der zweite Einlass-Durchlass **40** in der ersten Steuerscheibe **22** ist der Kaltwasser-Durchlass.

In der Stellung der zweiten Steuerscheibe **23** gemäss Fig. 3 sind sowohl der Kaltwasser-Durchlass **40** wie auch der Warmwasser-Durchlass **36** in der ersten Steuerscheibe **22** durch die zweite Scheibe **23** verschlossen, da die Durchlässe in beiden Steuerscheiben **22**, **23** nicht deckungsgleich stehen. Demzufolge entspricht diese Stellung der geschlossenen Stellung bzw. der Schliessstellung.

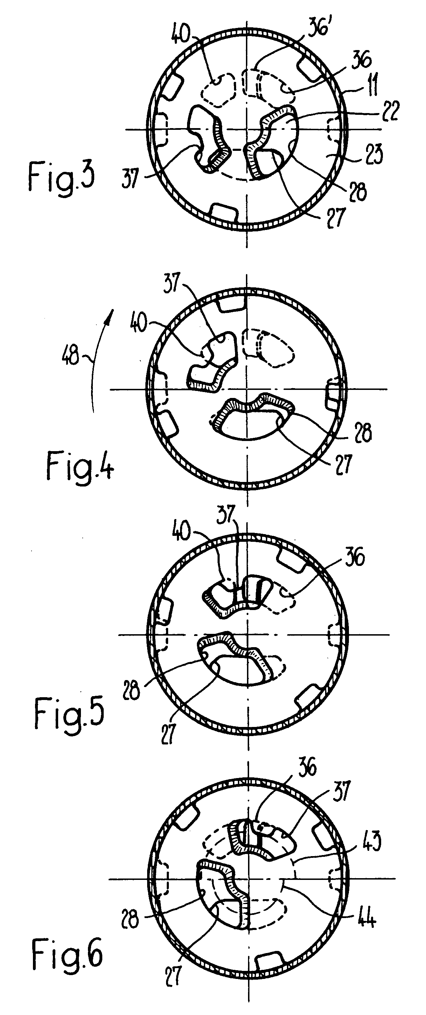

In der Stellung der zweiten Steuerscheibe **23** gemäss Fig. 4 decken sich zumindest teilweise einerseits die Einlass-Durchlässe **37**, **40** und andererseits die Auslass-Durchlässe **27**, **28**. Damit ist eine Verbindung vom Kaltwasser-Durchlass **40** zum Auslass-Durchlass **27** über die in der Fig. 1 dargestellte Auslass- bzw. Mischkammer **34** hergestellt. Diese Stellung entspricht der Kaltstellung.

Wird die zweite Steuerscheibe **23** in der in den Figuren 3 bis 6 dargestellten Anordnung relativ zur ersten **22** im Uhrzeigersinn verdreht, entspricht dies der Öffnungsrichtung **48**.

In der Stellung der zweiten Steuerscheibe **23** gemäss Fig. 5 decken sich zumindest teilweise einerseits der Einlass-Durchlass **37** sowohl mit dem Kaltwasser-Durchlass **40** wie auch mit dem Warmwasser-Durchlass **36** und andererseits die Auslass-Durchlässe **27**, **28**. Damit ist eine Verbindung zwischen dem Kalt- und dem Warmwasser-Durchlass **40**, **36** über die Auslass- bzw. Mischkammer **34** (Fig. 1) zum Auslass-Durchlass **27** hergestellt. Diese Stellung entspricht der Mischstellung.

In der Stellung der zweiten Steuerscheibe **23** gemäss Fig. 6 decken sich zumindest teilweise einerseits die Einlass-Durchlässe **36**, **37** und andererseits die Auslass-Durchlässe **27**, **28**. Damit ist eine Verbindung vom Warmwasser-Durchlass **36** über die Auslass- bzw. Mischkammer **34** (Fig. 1) zum Auslass-Durchlass **27** hergestellt. Diese Stellung entspricht der Warmstellung.

Der Warmwasser-Durchlass **36** in der ersten Steuerscheibe **22** weist eine Abschrägung **36**' auf (Fig. 3), so dass sich sein Querschnitt in Strömungsrichtung **31** (Fig. 1) erweitert.

Aus den in den Figuren 3 bis 6 gezeigten Stellungen geht hervor, dass beim Drehen der zweiten Steuerscheibe **23** im Uhrzeigersinn, also in Öffnungsrichtung **48**, von der Schliessstellung gemäss Fig. 3 ausgehend, zuerst der Kaltwasser-Durchfluss bis zur vollen Durchflussmenge gemäss Fig. 4 stetig freigegeben wird. Beim Weiterdrehen im Uhrzeigersinn **48** wird zusätzlich stetig der Warmwasser-Durchfluss freigegeben und damit Kalt- und Warmwasser gemäss Fig. 5 gemischt. Wird noch weiter im Uhrzeigersinn gedreht, erfolgt stetig eine Drosselung der Kaltwasser-Durchflussmenge, so dass die Temperatur des ausfliessenden Wassers weiter zunimmt, bis gemäss Fig. 6 nur noch der Warmwasser-Durchlass geöffnet ist. Die Durchlassöffnungen sind derart bemessen, dass die Gesamtdurchflussmenge nach voller Öffnung der Kaltwasserzufuhr konstant bleibt.

Nun ist es aber möglich, dass die Temperatur des angelieferten Warmwassers für den Gebrauch zu hoch ist. In einem solchen Fall lässt sich der Drehwinkel der zweiten Steuerscheibe **23** im Uhrzeigersinn begrenzen. Dazu dient die in den Figuren 1, 7 und 8 dargestellte Anordnung mit dem Temperaturbegrenzungsring **17**, dessen Funktion nachfolgend näher erläutert wird.

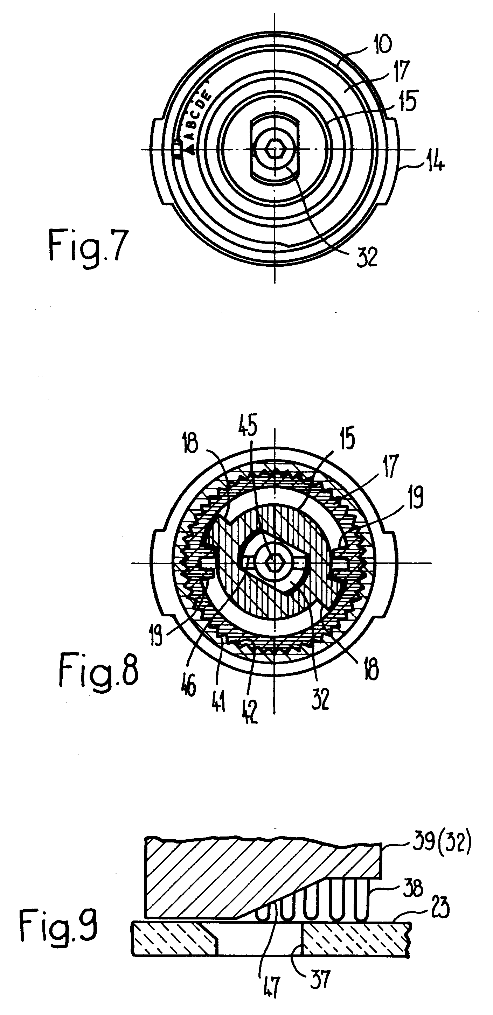

Die Fig. 8 zeigt im Querschnitt VIII - VIII gemäss Fig. 1 den eine Aussenverzahnung **41** aufweisenden Temperaturbegrenzungsring **17**. Dieser lässt sich an seinem aus dem Gehäuse-Oberteil **11** herausragenden Rand **17**' (Fig. 1) herausziehen und der Verzahnung **41** entsprechend stufenweise in eine im Oberteil **10** angeordnete Innenverzahnung **42** drehversetzt wieder einsetzen.

Der Temperaturbegrenzungsring **17** begrenzt mit seinen Anschlägen **19** den Drehwinkel der Steuerglocke **15**, welche die mit den Anschlägen **19** zusammenwirkenden Anschlagnocken **18** aufweist. Durch die Begrenzung des Drehwinkels wird nicht nur die maximale Öffnung des Warmwasser-Durchlasses **36** begrenzt, sondern auch der Kaltwasser-Durchlass **40** nicht vollständig geschlossen. Daraus resultiert eine Begrenzung der Temperatur des auslaufenden Mischwassers.

In der Stellung des Temperaturbegrenzungsringes **17** nach den Figuren 7 und 8 befinden sich in diesen Figuren nicht sichtbare gehäusefeste Anschläge genau unter den Anschlägen **19** des Temperaturbegrenzungsringes **17**. Diese gehäusefesten Anschläge begrenzen den Drehwinkel in der Schliessstellung.

Aus den vorstehenden Erläuterungen geht hervor, dass die zweite Steuerscheibe **23** erfindungsgemäss ausschliesslich um die Mittelachse x drehbar angeordnet ist und dass sowohl die korrespondierenden Einlass-Durchlässe **40**, **36**; **37** beider Steuerscheiben **22**; **23** einerseits wie auch deren korrespondierende Auslass-Durchlässe **27**; **28** andererseits jeweils auf einer gemeinsamen Kreislinie **43** bzw. **44** gemäss Fig. 6 derart verteilt angeordnet sind, dass bei Drehung der zweiten Steuerscheibe **23** in Öffnungsrichtung **48** nacheinander die Kaltwasser-Zufuhr bis zum Maximum freigegeben wird, danach zusätzlich die Warmwasser-Zufuhr freigegeben wird und anschliessend die Kaltwasser-Zufuhr bis zu der am Temperaturbegrenzungsring **17** eingestellten Begrenzung oder bis auf Null gedrosselt wird.

Fig. 9 zeigt in einem grösseren Massstab die bereits zur Fig. 1 erläuterten, zur Geräuschminderung dienenden zapfen- oder stegartigen Vorsprünge **38** am sektorartigen Abschnitt **39** des Verteilelementes **32**.

Ferner ist aus der Fig. 9 ersichtlich, wie der Einlass-Durchlass **37** in der zweiten Steuerscheibe **23** durch eine Profilierung **47** am sektorartigen Abschnitt **39** des Verteilelementes **32** in Abhängigkeit von der relativen Stellung zwischen dem Verteilelement **32** und der zweiten Steuerscheibe **23** teilweise verdeckt ist. Dadurch lässt sich der maximale Durchfluss einstellbar begrenzen.

Zum Einstellen des maximalen Durchflusses weist das Verteilelement **32** in seinem Zentrum gemäss Fig. 8 einen Innensechskant **45** und einen Schlitz **46** auf. Daran kann es mittels eines Innensechskantschlüssels oder eines Schraubendrehers relativ zur Steuerglocke **15** und damit relativ zur zweiten Steuerscheibe **23** verdreht werden. Der zweite O-Ring **33** (Fig. 1) dient dabei zusätzlich als Verdrehsicherung, um die eingestellte Stellung des Verteilelementes **32** innerhalb der Steuerglocke **15** zu halten. Dies genügt, da auf das Verteilelement **32** kein fremdes Drehmoment ausgeübt wird.

Der Einlass-Durchlass **37** in der zweiten Steuerscheibe **23** ist relativ zum Auslass-Durchlass **28** in Öffnungsrichtung **48** um weniger als 180° versetzt angeordnet. Vorzugsweise beträgt der Winkel zwischen dem Auslass-Durchlass **28** und dem Einlass-Durchlass **37** mindestens annähernd 145°.

In der ersten Steuerscheibe **22** beträgt der mittlere Winkel zwischen den Durchlässen **40**, **36** für die Kalt- und Warmwasserzufuhr vorzugsweise etwa 70°.

## Patentansprüche

1. Steuerpatrone für eine Einhebel-Mischarmatur, mit in einem Gehäuse (**10**, **11**) angeordneten Anschlüssen für die Zufuhr von Kalt- und Warmwasser sowie für den Auslass (**29**), mit zwei keramischen Steuerscheiben (**22**, **23**), von denen die erste (**22**) gehäusefest und die zweite (**23**) im Gehäuse (**10**, **11**) mittels eines Betätigungselementes (**15**) relativ zur ersten (**22**) bewegbar angeordnet ist, wobei die erste Steuerscheibe (**22**) einen ersten Einlass-Durchlass (**40**) für die Zufuhr von Kaltwasser, einen zweiten Einlass-Durchlass (**36**) für die Zufuhr von Warmwasser sowie einen Auslass-Durchlass (**27**) aufweist und wobei die zweite Steuerscheibe (**23**) einen Einlass-Durchlass (**37**) und einen Auslass-Durchlass (**28**) aufweist, **dadurch gekennzeichnet**, dass die zweite Steuerscheibe (**23**) ausschliesslich um eine Mittelachse (x) drehbar angeordnet ist und dass sowohl die korrespondierenden Einlass-Durchlässe (**40**, **36**; **37**) beider Steuerscheiben (**22**; **23**) einerseits wie auch deren korrespondierenden Auslass-Durchlässe (**27**; **28**) andererseits jeweils auf einer gemeinsamen Kreislinie (**43** bzw. **44**) derart verteilt angeordnet sind, dass bei Drehung der zweiten Steuerscheibe (**23**) in Öffnungsrichtung (**48**) nacheinander die Kaltwasser-Zufuhr bis zum Maximum freigegeben wird, danach zusätzlich die Warmwasser-Zufuhr freigegeben wird und anschliessend die Kaltwasser-Zufuhr bis auf Null gedrosselt wird.

2. Steuerpatrone nach Anspruch 1, wobei in der ersten Steuerscheibe (**22**) die Durchlässe (**40**, **36**) für die Kalt- und Warmwasserzufuhr nebeneinander und mindestens annähernd symmetrisch zu einer die Mittelachse (x) schneidenden Linie dem Auslass-Durchlass (**27**) gegenüberliegen, **dadurch gekennzeichnet**, dass in der zweiten Steuerscheibe (**23**) der Einlass-Durchlass (**37**) relativ zum Auslass-Durchlass (**28**) in Öffnungsrichtung (**48**) um weniger als 180° versetzt angeordnet ist.

3. Steuerpatrone nach Anspruch 2, dadurch gekennzeichnet, dass der Winkel zwischen dem Auslass-Durchlass (**28**) und dem Einlass-Durchlass (**37**) mindestens annähernd 145° beträgt.

4. Steuerpatrone nach Anspruch 2 oder 3, dadurch gekennzeichnet, dass der mittlere Winkel zwischen den Durchlässen (**40**, **36**) für die Kalt- und Warmwasserzufuhr in der ersten Steuerscheibe (**22**) etwa 70° beträgt.

5. Steuerpatrone nach einem der vorstehenden Ansprüche, dadurch gekennzeichnet, dass der Warmwasser-Durchlass (**36**) in der ersten Steuerscheibe (**22**) eine Abschrägung (**36**') aufweist, so dass sich sein Querschnitt in Strömungsrichtung (**31**) erweitert.

6. Steuerpatrone nach einem der vorstehenden Ansprüche, dadurch gekennzeichnet, dass der Einlass-Durchlass (**37**) in der zweiten Steuerscheibe (**23**) derart profiliert und auf die Einlass-Durchlässe (**40**, **36**) in der ersten Steuerscheibe (**22**) für Kalt- und Warmwasser abgestimmt ist, dass die Auslauf-Wassermenge des Mischwassers nach Erreichen der vollen Kaltwasser-Durchflussmenge auf diesem Wert konstant bleibt.

7. Steuerpatrone nach einem der vorstehenden Ansprüche, dadurch gekennzeichnet, dass der Drehwinkel der zweiten Steuerscheibe (**23**) in Öffnungsrichtung (**48**) durch mindestens einen verstellbaren Anschlag (**19**) begrenzt ist.

8. Steuerpatrone nach Anspruch 7, dadurch gekennzeichnet, dass der Anschlag (**19**) an einem Temperaturbegrenzungsring (**17**) angeordnet ist, der eine Aussenverzahnung (**41**) aufweist, die in eine im Gehäuse (**10**) angeordnete Innenverzahnung (**42**) stufenweise in Eingriff bringbar ist.

9. Steuerpatrone nach einem der vorstehenden Ansprüche, dadurch gekennzeichnet, dass unmittelbar an die zweite Steuerscheibe (**23**) angrenzend ein Verteilelement (**32**) angeordnet ist, welches zusammen mit der zweiten Steuerscheibe (**23**) eine Auslass- oder Mischkammer (**34**) begrenzt.

10. Steuerpatrone nach Anspruch 9, dadurch gekennzeichnet, dass das Verteilelement (**32**) einen sektorartigen Abschnitt (**39**) aufweist, der zapfen- oder stegartige Vorsprünge (**38**) im Bereich des Einlass-Durchlasses (**37**) der zweiten Steuerscheibe (**23**) trägt, die sich dem Einlass-Durchlass (**37**) entgegenerstrecken.

11. Steuerpatrone nach Anspruch 10, dadurch gekennzeichnet, dass das Verteilelement (**32**) dem Einlass-Durchlass (**37**) in der zweiten Steuerscheibe (**23**) gegenüberliegend eine Profilierung (**47**) an seinem sektorartigen Abschnitt (**39**) aufweist, um in Abhängigkeit von der relativen Stellung zwischen dem Verteilelement (**32**) und der zweiten Steuerscheibe (**23**) den maximalen Durchfluss einstellbar zu begrenzen.

12. Verwendung der Steuerpatrone nach einem der vorstehenden Ansprüche in einer für ein Spital bestimmten Einhebel-Mischarmatur.
